# EUROPÄISCHE PATENTANMELDUNG

(11) **EP 4 410 163 A1**
(43) Veröffentlichungstag der Anmeldung: **07.08.2024**
(21) Anmeldenummer: 24152951.0
(22) Anmeldetag: 19.01.2024
(51) Int. Cl.: A47J 43/046, A47J 43/07

(54) **AUFSATZ FÜR EINE KÜCHENMASCHINE**

(30) Priorität: 03.02.2023 DE 102023102737; 10.02.2023 DE 102023103322
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Die vorliegende Erfindung betrifft einen Aufsatz für eine Küchenmaschine, wobei die Küchenmaschine einen eine Topföffnung (1) aufweisenden Zubereitungstopf (2) sowie einen eine Zuführöffnung (3) aufweisenden Deckel (4) umfasst, wobei die Topföffnung (1) mit dem Deckel (4) abdeckbar ist, wobei die Zuführöffnung (3) einen geringeren Durchmesser als die Topföffnung (1) aufweist, der Aufsatz aufweisend ein in die Zuführöffnung (3) einsetzbares Rohr (5), das eine erste Rohröffnung (6) und eine zweite Rohröffnung (7) aufweist, wobei bei in die Zuführöffnung (3) eingesetztem Rohr (5) die erste Rohröffnung (6) nach topfinnen und die zweite Rohröffnung (7) nach topfaußen weist. Mit einem wechselbaren Funktionselement (8), welches an dem Rohr (5) befestigbar ist, kann eine Stoffleitung durch die erste Rohröffnung (6) beeinflussbar werden.

## Beschreibung

Die vorliegende Erfindung betrifft einen Aufsatz für eine Küchenmaschine. Bei dem Aufsatz kann es sich insbesondere um einen Multifunktionsaufsatz wie einen Multifunktionsmessbecher handeln.

Küchenmaschinen werden in der Regel zur Bearbeitung und Verarbeitung von Lebensmitteln und zur Zubereitung von Speisen eingesetzt. Es existieren Multifunktionsküchenmaschinen, wie beispielsweise jene vom Unternehmen "Vorwerk" vertriebene Thermomix^{®} Küchenmaschine. Eine solche Küchenmaschine umfasst einen eine Topföffnung aufweisenden Zubereitungstopf sowie einen eine Zuführöffnung aufweisenden Deckel, wobei die Topföffnung mit dem Deckel abdeckbar (verschließbar) ist, und wobei die Zuführöffnung einen geringeren Durchmesser als die Topföffnung aufweist. Meist ist die Zuführöffnung mittig im Deckel angeordnet. In dem Zubereitungstopf kann im Bereich eines Topfbodens ein Misch- und Zerkleinerungswerkzeug rotierbar angeordnet sein, insbesondere ein Mixmesser. Beim Betrieb der Küchenmaschine ist die Topföffnung des Zubereitungstopfes mit dem Deckel abgedeckt. Durch die in dem Deckel ausgebildete Zuführöffnung können Zutaten in den Zubereitungstopf eingeführt werden. Der Zubereitungstopf ist in eine Topfaufnahme einer Küchenmaschinen-Basiseinheit eingesetzt. Der Zubereitungstopf kann ein Heizelement (eine Heizfunktion) aufweisen, mittels welcher im Zubereitungstopf befindliche Speisen oder Lebensmittel aufgeheizt oder gegart werden können.

Messbecher zur Verwendung mit Küchenmaschinen sind allgemein bekannt. So offenbart die DE 10 2014 111 216 B4 einen Messbecher zum teilweisen Verschließen einer Durchgangsöffnung eines Gefäßdeckels ("Deckel" gemäß der hiesigen Terminologie) eines Küchengerätes ("Küchenmaschine" gemäß der hiesigen Terminologie), wobei der Messbecher einen ring- oder tellerförmigen Randbereich aufweist, welcher Randbereich mindestens ein Abstandselement zur Beabstandung des Messbechers von dem Gefäßdeckel aufweist. Der Messbecher weist mindestens eine Belüftungsöffnung auf. Die Abstandselemente gewährleisten, dass sich zwischen dem ring- oder tellerförmigen Randbereich und dem Gefäßdeckel ein Spalt bildet, durch welchen Fluide vom Gefäßdeckel in das Gefäß ("Zubereitungstopf" gemäß der hiesigen Terminologie) durch die Durchgangsöffnung ("Zuführöffnung" gemäß der hiesigen Terminologie) abfließen können. Die Belüftungsöffnung dient dem Druckausgleich, sodass aus dem Zubereitungstopf entweichender Dampf über die Belüftungsöffnung nach außen entweichen kann.

Der aus DE 10 2014 111 216 B4 bekannte Messbecher weist lediglich eine Funktionalität zur Verwendung als Messbecher und Abdeckteil der Zuführöffnung auf.

Aufgabe der vorliegenden Erfindung ist es, einen Aufsatz für eine Küchenmaschine bereitzustellen, der vielseitig und multifunktional einsetzbar ist. Eine entsprechende Aufgabe liegt der ebenfalls mit der vorliegenden Erfindung vorgeschlagenen Küchenmaschine zugrunde.

Gelöst werden diese Aufgaben durch einen Aufsatz mit den Merkmalen des Anspruchs 1 sowie durch eine Küchenmaschine mit den Merkmalen des Anspruchs 16.

So betrifft die vorliegende Erfindung zunächst einen Aufsatz für eine Küchenmaschine, wobei die Küchenmaschine einen eine Topföffnung aufweisenden Zubereitungstopf sowie einen eine Zuführöffnung aufweisenden Deckel umfasst, wobei die Topföffnung mit dem Deckel abdeckbar ist, wobei die Zuführöffnung einen geringeren Durchmesser als die Topföffnung aufweist, der Aufsatz aufweisend ein in die Zuführöffnung einsetzbares Rohr, das eine erste Rohröffnung und eine zweite Rohröffnung aufweist, wobei bei in die Zuführöffnung eingesetztem Rohr die erste Rohröffnung nach topfinnen und die zweite Rohröffnung nach topfaußen weist. Der Aufsatz kennzeichnet sich durch ein wechselbares Funktionselement, das an dem Rohr befestigbar und mit dem eine Stoffleitung durch die erste Rohröffnung beeinflussbar ist.

Mittels des Funktionselements kann eine Stoffleitung durch die erste Rohröffnung (diese ist im Betrieb die untere Rohröffnung) von topfaußen nach topfinnen oder umgekehrt beeinflusst werden.

Unter "Beeinflussung" einer Stoffleitung kann beispielsweise zu verstehen sein, dass eine Einstellung vorgenommen wird, bei der ein Stoffdurchtritt durch die erste Rohröffnung (sei es von topfaußen nach topfinnen oder von topfinnen nach topfaußen, also richtungsunabhängig) verhindert (gesperrt) wird. Das Funktionselement dient in diesem Fall als Stoff-Barriere (Dichtung oder Stopfen).

Ferner kann unter einer "Beeinflussung" der Stoffleitung eine Einstellung/Anpassung einer Stoffdurchlassmenge pro Zeiteinheit (Durchlassrate) verstanden werden. Es kann ferner eingestellt werden, dass nur Stoffe mit einer bestimmten Partikelgröße und/oder Konsistenz durch die erste Rohröffnung hindurchtreten können. Mit dem Funktionselement kann somit selektiv (qualitativ) der Stoffdurchtritt (die Stoffleitung) durch die erste Rohröffnung eingestellt werden. Es kann eingestellt werden, dass Stoffe einer bestimmten Partikelgröße durch die Rohröffnung hindurchtreten können, während dies Stoffen einer anderen Partikelgrößen nicht ermöglicht ist.

Unter "Stoffen" können gasförmige oder flüssige Fluide verstanden werden. Ein Beispiel für ein gasförmiges Fluid ist Wasserdampf, Rauch oder Luft. Flüssige Fluide können Flüssigkeiten oder zähflüssige Stoffe (z. B. Eiweiß, Eigelb) sein. Unter "Stoffen" können auch Feststoffe (insbesondere pulverförmige oder granulöse Feststoffe) wie Mehl, Zucker, Salz, Gewürze etc. verstanden werden.

Die Beeinflussung der Stoffleitung kann ermöglichen, den Durchlass von Gas/Dampf/Rauch von topfinnen nach topfaußen zu erlauben oder zu verhindern, was bei bestimmten Zubereitungsprozessen von Speisen erwünscht oder vorteilhaft sein kann.

Zudem kann unter der "Beeinflussung der Stoffdurchleitung" die Einstellung eines Durchlasses von Stoffen (insbesondere Fluiden) beim Eintreten in den Zubereitungstopf verstanden werden (z. B. nach Art einer Trennvorrichtung wie einem Sieb), was beispielsweise zum Trennen von Zutaten wie Eiweiß von Eigelb, groben und feinen Zutaten (unterschiedliche Partikelgrößen) etc. vorteilhaft sein kann. Der Durchlass von Stoffen kann somit in quantitativer Hinsicht (Durchlassmenge pro Zeiteinheit) sowie in qualitativer Hinsicht (Durchlassen bestimmter Stoffe, Verhindern des Durchlasses bestimmter Stoffe) eingestellt werden.

Die Wechselbarkeit des Funktionselements meint, dass dieses von einem Nutzer austauschbar ist. Beispielsweise können für unterschiedliche Anwendungen oder Einstellungen unterschiedliche Funktionselemente vorgesehen sein. Beispielsweise kann ein Wechselsatz von verschiedenen Funktionselementen mit dem Aufsatz bereitgestellt werden. So kann zum Beispiel ein Funktionselement bereitgestellt sein, das lediglich als Barriere dient, also keinen Stoffdurchlass durch die erste Rohröffnung ermöglicht. Weitere Funktionselemente können bestimmte Durchlassraten pro Zeiteinheit ermöglichen. Bestimmte Funktionselemente können den Durchlass von Stoffen bestimmter Partikelgröße ermöglichen bzw. verhindern, dienen also einem selektiven Stoffdurchlass. Andere Funktionselemente können die Fallrichtung, Strömungsrichtung oder gleichen von Stoffen unmittelbar nach Durchtritt durch die erste Rohröffnung einstellen und beeinflussen damit ebenfalls die Stoffleitung durch die erste Rohröffnung.

Weitere Ausgestaltungen des mit der Erfindung vorgeschlagenen Aufsatzes sind in den Unteransprüchen sowie in der nachfolgenden Beschreibung angegeben. Diese Ausgestaltungen können ebenfalls Ausgestaltungen der ebenfalls mit der Erfindung vorgeschlagenen Küchenmaschine sein.

Das Rohr kann allgemein auch als Messbecher ausgebildet sein, wozu dieses mit einer Messskala versehen sein kann. Das Rohr kann optisch transparent sein. Die Messskala kann am Rohrinnenmantel oder am Rohraußenmantel angeordnet sein.

Das Rohr ist vorzugsweise derart ausgebildet, dass dieses derart geformt und bemaßt ist, dass der Rohraußenmantel bei in die Zuführöffnung eingesetztem Rohr, umfänglich an einer Innenseite der Zuführöffnung anliegt. Dabei liegt das Rohr vorzugsweise dichtend an der Zuführöffnung an, d.h. Stoffe können nicht ohne Weiteres von topfaußen nach topfinnen des Zubereitungstopfes gelangen und ferner können Stoffe nicht ohne Weiteres von topfinnen des Zubereitungstopfes nach topfaußen gelangen. Vorzugsweise liegt bei in die Zuführöffnung eingesetztem Rohr kein Spalt zwischen Rohraußenmantel und der Zuführöffnung vor. Steigt der sich im Innenraum des Zubereitungstopfes (z. B. durch aufsteigenden Dampf) entwickelnde Druck jedoch auf ein bestimmtes Niveau, so kann das Rohr vom im Zubereitungstopf aufsteigenden Dampf aus seinem Sitz in der Zuführöffnung kurzzeitig vertikal herausbewegt (gedrückt) werden, sodass ein Teil des Dampfes nach topfaußen entweichen kann. Nach Entweichen eines Teils des Dampfs (Druckausgleich) senkt sich das Rohr wieder in seinen ursprünglichen Sitz in der Zuführöffnung ab.

Vorzugsweise sitzt das Rohr lose in der Zuführöffnung, d.h. nicht im Presssitz, sodass das Rohr durch aufsteigenden Dampf - bei Erreichen eines bestimmten Innendrucks im Zubereitungstopf - herausbewegbar ist. Gleichsam liegt das Rohr in seiner nicht herausbewegten Stellung mit seinem Rohraußenmantel umfänglich an einer Innenseite der Zuführöffnung an. Zur Gewährleistung eines "losen" Sitzes des Rohrs in der Zuführöffnung kann das Rohr zumindest bereichsweise einen Außendurchmesser aufweisen, der in etwa oder genau dem Innendurchmesser der Zuführöffnung entspricht. Der Außendurchmesser des Rohrs kann sich entlang einer Vertikalachse des Rohrs verändern, das Rohr kann also konisch ausgebildet sein. Beispielsweise kann sich das Rohr von oben nach unten konisch verjüngen. Mit "oben" ist an dieser Stelle jenes bei einem Zustand, bei dem die Topföffnung des Zubereitungstopfes mit dem Deckel abgedeckt ist und bei dem das Rohr in die Zuführöffnung eingesetzt ist, dem im Bereich des Topfbodens des Zubereitungstopfes angeordneten Mixmesser abgewandte Ende des Rohrs (zweite Rohröffnung) zu verstehen, während mit "unten" jenes dem Mixmesser zugewandte Ende des Rohrs (erste Rohröffnung) zu verstehen ist.

Nach einer weiteren Ausgestaltung kann vorgesehen sein, dass zwischen Rohr und Innenseite der Zuführöffnung ein Spalt vorgesehen ist, d.h. das Rohr weist einen Außendurchmesser auf, der geringer ist der Innendurchmesser der Zuführöffnung.

Nach einer weiteren Ausgestaltung kann vorgesehen sein, dass das Funktionselement an dem Rohr befestigbar ist, nämlich durch Einsetzen in das Rohr, insbesondere in einem Klemmsitz. Dazu kann das Funktionselement zumindest bereichsweise einen Außendurchmesser aufweisen, der größer ist als der Innendurchmesser des Rohrs. Dabei kann das Funktionselement formflexibel sein, sodass das Funktionselement komprimiert werden kann (dabei verringert sich dessen Außendurchmesser). In komprimierter Form kann das Funktionselement in das Rohr eingesetzt werden, wobei sodann das Funktionselement aus der komprimierten Form expandiert und das Funktionselement sodann klemmend in dem Rohr befestigt ist.

Nach einer weiteren Ausgestaltung kann vorgesehen sein, dass an einem Rohrinnenmantel des Rohrs, insbesondere im Bereich der ersten Rohröffnung, ein Stützkragen ausgebildet ist, der ausgehend von dem Rohrinnenmantel radial von dem Rohrinnenmantel nach rohrinnen weg ragt, wobei das Funktionselement einen Stützflansch aufweist, mit welchem sich das Funktionselement bei Befestigung desselbigen an dem Rohr an dem Stützkragen abstützt, sodass eine Relativbewegung des Funktionselements entlang einer Rohrlängsachse des Rohrs in Richtung der ersten Rohröffnung blockiert ist. Der Stützkragen kann umlaufend ausgebildet sein, d.h. er kann sich umfänglich des gesamten Rohrinnenmantels erstrecken. Der Stützkragen kann auch nur an einem oder mehreren (beabstandeten) Abschnitten des Rohrinnenmantels angeordnet sein. Vorzugsweise ist der Stützkragen einteilig an dem Rohr angeordnet. Der Stützkragen kann im Bereich der ersten Rohröffnung angeordnet sein und diese begrenzen.

Nach einer weiteren Ausgestaltung kann vorgesehen sein, dass das Funktionselement eine Rutsche ist, mit der Stoffe gerichtet aus dem Rohr, insbesondere aus der ersten Rohröffnung, leitbar sind. An einem oberen Rutschen-Ende kann ein Sützflansch angeordnet sein, mit dem sich die Rutsche an dem Stützkragen abstützen kann. Über die Rutsche können Stoffe (z. B. Gewürze oder andere Zutaten) nach deren Durchtritt durch die erste Rohröffnung richtungsgeleitet werden. Vorzugsweise leitet die Rutsche die Stoffe in einen äußeren Bereich eines Topfinnenraums. Häufig weisen die im Topfboden angeordneten Mixmesser radial nach außen ragende Arme auf. Über eine solche Rutsche können Stoffe direkt in einen Arbeitsbereich der Arme geleitet werden. Verhindert wird dabei, dass sich Stoffe ungewünscht im Bereich einer mittig angeordneten Welle oder eines Wellenstumpfes des Mixmessers ansammeln, also einem Bereich, in dem keine ausreichende Durchmischung erfolgt.

Nach einer weiteren Ausgestaltung kann vorgesehen sein, dass das Funktionselement ein Verschlusselement, insbesondere eine Verschlussscheibe ist, mit dem die erste Rohröffnung abdichtbar ist, sodass eine Stoffleitung durch die erste Rohröffnung verhindert ist. In diesem Fall kann das im Bereich der ersten Rohröffnung abgedichtete Rohr die Funktion eines Bechers aufweisen. Das Verschlusselement bzw. die Verschlussscheibe bildet dabei den Becherboden aus. Dabei können Stoffe in den Becher eingefüllt werden und sich in diesem sammeln. In Verbindung mit einer am Rohr angeordneten Messskala kann der Becher als Messbecher dienen.

Nach einer weiteren Ausgestaltung kann vorgesehen sein, dass das Funktionselement ein Siebelement, insbesondere eine mit einer oder mehreren Lochöffnungen gelochte Siebscheibe ist. Weist das Siebelement lediglich eine, vorzugsweise zentriert angeordnete Lochöffnung auf, so kann das Siebelement besonders vorteilhaft zum Trennen von Emulsionen oder zähflüssigen Gemischen (wie Eiweiß und Eigelb) genutzt werden.

Nach einer weiteren Ausgestaltung kann vorgesehen sein, dass das Funktionselement zwei miteinander drehbar verbundene Drehscheiben aufweist, die jeweils eine Lochöffnung, insbesondere jeweils eine Langlochöffnung, aufweisen, und dass durch Verdrehen der Drehscheiben gegeneinander ein Deckungsgrad der jeweiligen Lochöffnungen, insbesondere der Langlochöffnungen einstellbar ist, wobei über den Deckungsgrad eine Stoffleitung durch die erste Rohröffnung einstellbar ist. Die Langlochöffnungen können jeweils eine Bogenform aufweisen. Je größer der Deckungsgrad der Langlochöffnungen, je größer die Durchlassrate eines bestimmten Stoffs. Je größer der Deckungsgrad der Langlochöffnungen, desto größere Stoffpartikel können durch die erste Rohröffnung hindurchtreten. Die Drehscheiben können eine Verschlussstellung einnehmen, in welcher der Deckungsgrad der jeweiligen Lochöffnungen gleich Null ist, und in welcher eine Stoffleitung durch die erste Rohröffnung verhindert ist. In diesem Fall dienen die Drehscheiben gemeinsam als Verschlusselement für die erste Rohröffnung.

Nach einer weiteren Ausgestaltung kann vorgesehen sein, dass an dem Rohr, vorzugsweise an einem Rohraußenmantel im Bereich der zweiten Rohröffnung ein Trichterkörper befestigt ist. Der Trichterkörper kann einstückig an dem Rohr angeordnet sein, beispielsweise kann der Trichterkörper an das Rohr angespritzt sein (im Spritzguss). Vorzugsweise nimmt der Durchmesser des Trichterkörpers ausgehend von dem Rohr in einer dem Rohr abgewandten Richtung zu. Auch ein Anvulkanisieren des Trichterkörpers an das Rohr ist möglich. Der Trichterkörper kann aus demselben Material gefertigt sein wie das Rohr, gleichsam aber auch aus einem anderweitigen Material.

Nach einer weiteren Ausgestaltung kann vorgesehen sein, dass ein von dem Trichterkörper umgebener Trichterraum in die zweite Rohröffnung mündet. Dadurch ist es möglich über den Trichterkörper (Trichter) Stoffe in Richtung des Rohrs einzufüllen. Diese Stoffe können je nach Funktion des Funktionselements auch unmittelbar über den Trichter und das Rohr in den Zubereitungstopf eingefüllt werden.

Nach einer weiteren Ausgestaltung kann vorgesehen sein, dass der Trichterkörper ziehharmonikaartig auffaltbar ist, und von einer eingefalteten Stellung, in welcher der Trichterkörper keine Trichterfunktion ausbildet, in eine ausgefaltete Stellung, in welcher der Trichterkörper eine Trichterfunktion ausbildet, auffaltbar ist.

Das Auffalten ist reversibel, d.h. der Trichterkörper kann aufgefaltet und im Anschluss wieder eingefaltet werden. Der Trichterkörper ist vorzugsweise im Bereich seines unteren Endes an das Rohr angeflanscht, z. B. angespritzt (im Wege eines Kunststoffspritzgießens) oder anvulkanisiert. Unter einem ziehharmonikaartigen Auffalten kann auch ein teleskopartiges Auffalten verstanden werden. Gleiches gilt für den Vorgang des Einfaltens. Der Trichterkörper kann dazu mehrere Faltglieder aufweisen, die jeweils eine kreisförmige oder zylindrische Form aufweisen und jeweils einen abweichenden Durchmesser aufweisen. Von innen nach außen, also ausgehend von jenem am Rohr befestigten Ende des Trichterkörpers nimmt der Durchmesser der Faltglieder zu. Letztlich weist der Trichterkörper im aufgefalteten Zustand von oben nach unten (also in Richtung des Rohrs) eine sich konisch verjüngende Form auf. Der auf- und einfaltbare Trichterkörper kann als flexibler, ausziehbarer Kragen verstanden werden.

Der Trichterkörper kann aus einem Elastomer gebildet sein. Auch kann der Trichterkörper aus einem anderweitigen Kunststoff gebildet sein. Der Trichterkörper kann aus Gummi gefertigt sein. Das Rohr ist vorzugsweise aus Kunststoff gefertigt. Bei dem Kunststoff kann es sich ebenfalls um ein Elastomer handeln. Eine Fertigung aus einem Elastomer oder einem anderen flexiblen (elastischen Kunststoff, oder Gummi ist vorteilhaft, sofern der Trichterkörper ziehharmonikaartig auffaltbar und einfaltbar ausgebildet ist.

Nach einer weiteren Ausgestaltung kann vorgesehen sein, dass der Trichterkörper in seiner eingefalteten Stellung eine, vorzugsweise ringförmig durchgängige, Standfläche des Aufsatzes auf dem Deckel ausbildet. Dazu kann beispielsweise eine umlaufende und in Richtung des Deckels weisende Außenkante eines Faltglieds dienen. Diese Außenkante kann eine Standfläche des Aufsatzes auf dem Deckel ausbilden. Die Standfläche kann auch durch mehrere Außenkanten (mehrerer Faltglieder) ausgebildet werden.

Nach einer weiteren Ausgestaltung kann vorgesehen sein, dass an dem Rohraußenmantel ein umlaufender Lagerflansch angeordnet ist, der eine Standfläche des Aufsatzes auf dem Deckel bildet. Der Lagerflansch kann unmittelbar an dem Rohr angeflanscht sein. Der Lagerflansch kann aus Kunststoff gefertigt sein. Der Lagerflansch kann einstückig mit dem Rohr ausgebildet sein. Der Lagerflansch kann - wie erwähnt - umlaufend an den Rohraußenmantel angrenzen und mit diesem verbunden sein. Der Lagerflansch ist vorzugsweise konzentrisch zum Rohr (bzw. Rohraußenmantel) ausgebildet, beispielsweise nach Art einer konzentrischen Scheibe. Der Lagerflansch kann von dem Rohraußenmantel nach außen weg kragen. Der Lagerflansch kann als Lagerkragen bezeichnet werden. Vorzugsweise liegt der Lagerflansch umfänglich auf dem Deckel auf. Der Lagerflansch stützt den Aufsatz gegenüber dem Deckel ab. Der Lagerflansch kann Schlitze (Langlöcher) oder Lochöffnungen aufweisen.

Nach einer weiteren Ausgestaltung kann vorgesehen sein, dass an dem Rohraußenmantel mehrere Lagerflansche beabstandet zueinander angeordnet sind, die gemeinsam eine Standfläche des Aufsatzes auf dem Deckel bilden. Die besagten Lagerflansche können in Form von Stegen ausgebildet sein. Die Lagerflansche sind vorzugsweise gleichmäßig, insbesondere symmetrisch um den Rohraußenmantel herum angeordnet. Die Lagerflansche können radial von dem Rohraußenmantel nach außen abstehen. Die Lagerflansche sind jeweils mit dem Rohraußenmantel verbunden, beispielsweise einstückig. Die Lagerflansche können bei in die Zuführöffnung eingesetztem Rohr auf dem Deckel aufliegen. Die Lagerflansche stützen den Aufsatz gegenüber dem Deckel ab.

Nach einer weiteren Ausgestaltung kann vorgesehen sein, dass an dem Rohr oder an dem Trichterkörper, insbesondere in einer an dem Rohr oder dem Trichterkörper ausgebildeten Lagerfalte, ein Dampfableitrohr befestigbar, insbesondere durch Eingriff einer Lagerkante des Dampfableitrohrs in die Lagerfalte, lösbar befestigbar ist. Die Lagerkante des Dampfableitrohrs kann an einem unteren Ende des Dampfableitrohrs ausgebildet sein und beispielsweise durch eine Kante einer Dampfeintrittsöffnung gebildet sein. Die Lagerfalte kann eine Ausnehmung im Rohr oder Trichterkörper sein. Lagerfalte und Lagerkante sind vorzugsweise in Bezug auf einen Formschluss zueinander korrespondierend ausgebildet.

Das Dampfableitrohr kann aus Kunststoff gefertigt sein. Das Dampfableitrohr weist eine von einem Dampfableitrohr-Rand begrenzte Dampfeintrittsöffnung auf, wobei das Dampfableitrohr mit seinem Ende, an welchem die Dampfeintrittsöffnung ausgebildet ist, mit dem Rohr oder Trichterkörper verbindbar bzw. auf diesen aufsteckbar ist. Im Bereich der Dampfeintrittsöffnung kann ein Gewinde vorgesehen sein, mit welchem das Dampfableitrohr auf ein dazu korrespondierendes rohrseitiges Gewinde des Rohrs oder ein Trichterkörperseitiges Gewinde des Trichterkörpers drehbar ist. Ferner weist das Dampfableitrohr gegenüberliegend zu der Dampfeintrittsöffnung eine Dampfaustrittsöffnung auf, die ebenfalls durch einen Dampfableitrohr-Rand begrenzt wird. Ist das Rohr in die Zuführöffnung des Deckels eingesetzt und ist das Dampfableitrohr an dem Rohr oder Trichterkörper befestigt bzw. aufgesteckt, so ist Dampfableitrohr derart geformt, dass es den Dampf schräg nach oben vom Rohr (bzw. Aufsatz) wegleitet. In Bezug auf eine durch den Aufsatz bzw. das Rohr verlaufende Vertikalachse erstreckt sich das Dampfableitrohr bei Befestigung an dem Rohr oder Trichterkörper in einem Winkel zur besagten Vertikalachse, beispielsweise in einem Winkel von 30 bis 60°. Die Verwendung eines Dampfableitrohrs ist vorteilhaft, da damit der im Zubereitungstopf entstehende Dampf gerichtet abgeleitet werden kann, beispielsweise in Richtung einer Dunstabzugshaube oder in Richtung eines Fensters. Ist sowohl das Rohr in die Zuführöffnung eingesetzt als auch das Dampfableitrohr am Rohr oder Trichterkörper befestigt und ermöglicht das Funktionselement (z. B. aufgrund seiner Konstruktion oder Stellung) einen Stoffdurchlass durch die erste Rohröffnung, so kann bei einem Zubereitungsvorgang im Zubereitungstopf aufsteigender Dampf nacheinander durch die erste Rohröffnung, das Rohr, und die zweite Rohröffnung hindurchtreten und über das Dampfableitrohr nach außen abgeleitet werden. Die Befestigungsmöglichkeit des Dampfableitrohrs erhöht die Multifunktionalität des mit der Erfindung vorgeschlagenen Aufsatzes.

Weiterhin wird die Erfindung zugrunde liegende Aufgabe gelöst mit einer Küchenmaschine, die einen eine Topföffnung aufweisenden Zubereitungstopf sowie einen eine Zuführöffnung aufweisenden Deckel umfasst, wobei die Topföffnung mit dem Deckel abdeckbar ist, wobei die Zuführöffnung einen geringeren Durchmesser als die Topföffnung aufweist, wobei die Küchenmaschine weiterhin einen Aufsatz umfasst, aufweisend ein in die Zuführöffnung einsetzbares Rohr, das eine erste Rohröffnung und eine zweite Rohröffnung aufweist, wobei bei in die Zuführöffnung eingesetztem Rohr die erste Rohröffnung nach topfinnen und die zweite Rohröffnung nach topfaußen weist. Die Küchenmaschine zeichnet sich aus durch ein wechselbares Funktionselement, das an dem Rohr befestigbar und mit dem eine Stoffleitung durch die erste Rohröffnung beeinflussbar ist.

Die Figuren spezifizieren die Erfindung weiter. Diese zeigen in
- Fig. 1: eine schematische Querschnittsansicht einer mit der Erfindung vorgeschlagenen Küchenmaschine;
- Fig. 2: eine Explosionsdarstellung der Komponenten aus Fig. 1;
- Fig. 3: eine schematische Querschnittsansicht eines Aufsatzes, der in der Küchenmaschine nach Fig. 1 zum Einsatz kommt, wobei sich der Trichterkörper in einer eingefalteten Stellung befindet;
- Fig. 4: eine schematische Querschnittsansicht eines Aufsatzes, der in der Küchenmaschine nach Fig. 1 zum Einsatz kommt, wobei sich der Trichterkörper in einer ausgefalteten Stellung befindet;
- Fig. 5: eine schematische Querschnittsansicht eines Aufsatzes, der in der Küchenmaschine nach Fig. 1 zum Einsatz kommt, wobei der Trichterkörper sowohl in einer ausgefalteten Stellung als auch in seiner eingefalteten Stellung dargestellt ist, und wobei der Aufsatz ohne Funktionselement dargestellt ist;
- Fig. 6: Perspektivansicht eines Funktionselements;
- Fig. 7: Perspektivansicht eines weiteren Funktionselements;
- Fig. 8: Perspektivansicht eines weiteren Funktionselements;
- Fig. 9: Perspektivansicht eines weiteren Funktionselements;
- Fig. 10: Perspektivansicht eines weiteren Funktionselements;
- Fig. 11: Perspektivansicht des Funktionselements aus Fig. 10 von unten;
- Fig. 12: Querschnittsansicht des Funktionselements aus Fig. 10 und 11;
- Fig. 13: eine schematische Querschnittsansicht einer mit der Erfindung vorgeschlagenen Küchenmaschine, wobei ein Funktionselement nach Fig. 9 verwendet wird;
- Fig. 14: eine Explosionsdarstellung der Komponenten aus Fig. 13.

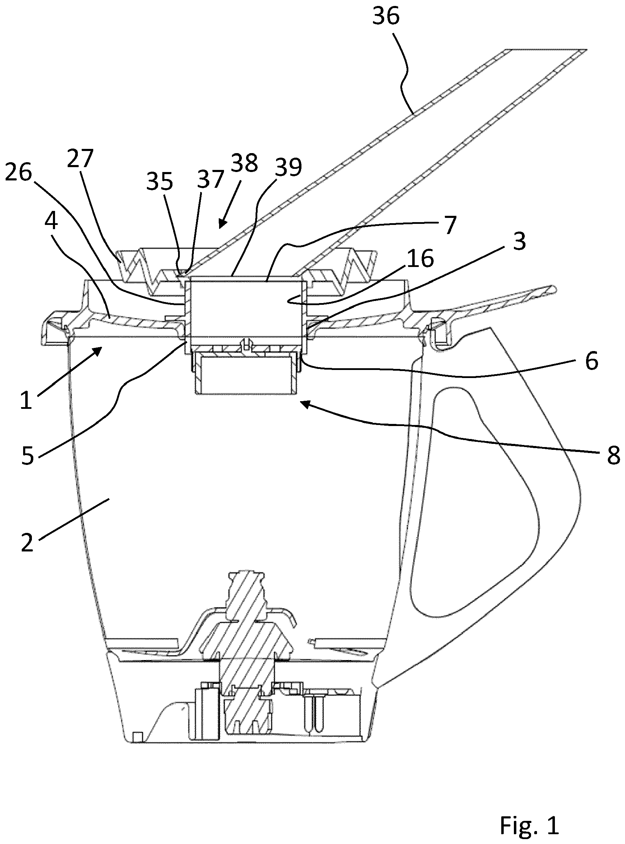

In der Fig. 1 ist eine schematische Querschnittsansicht einer mit der Erfindung vorgeschlagenen Küchenmaschine dargestellt. Die Küchenmaschine umfasst einen eine Topföffnung 1 aufweisenden Zubereitungstopf 2 sowie einen eine Zuführöffnung 3 aufweisenden Deckel 4 umfasst, wobei die Topföffnung 1 mit dem Deckel 4 abgedeckt ist. Die Zuführöffnung 3 weist einen geringeren Durchmesser als die Topföffnung 1 auf. Die Küchenmaschine umfasst weiterhin einen Aufsatz, aufweisend ein in die Zuführöffnung 3 eingesetztes Rohr 5, das eine erste Rohröffnung 6 und eine zweite Rohröffnung 7 aufweist, wobei bei in die Zuführöffnung 3 eingesetztem Rohr 5 (wie hier dargestellt) die erste Rohröffnung 6 nach topfinnen und die zweite Rohröffnung 7 nach topfaußen weist. Der Aufsatz weist ferner ein wechselbares Funktionselement 8 auf, das an dem Rohr 5 befestigbar und mit dem eine Stoffleitung durch die erste Rohröffnung 6 beeinflussbar ist.

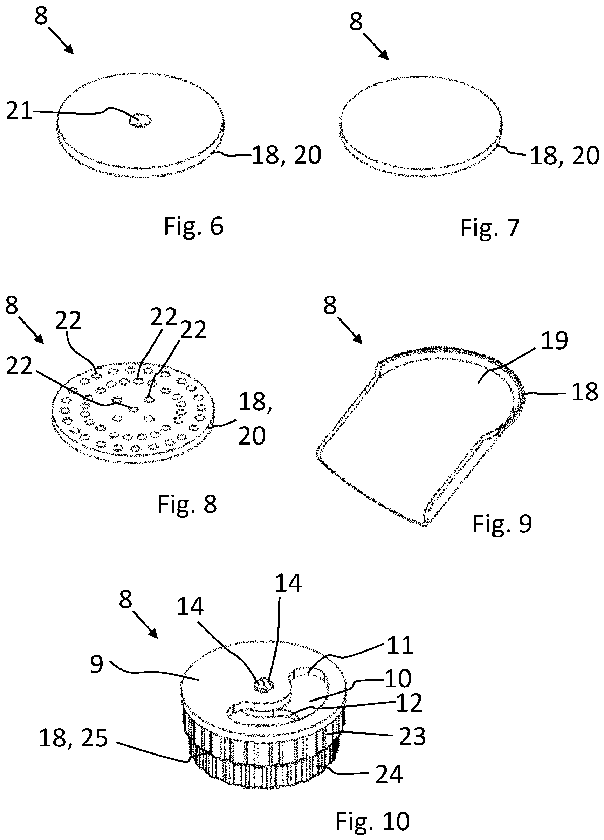

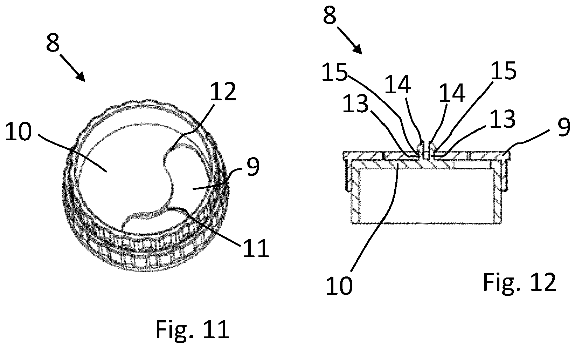

In der Figur 1 ist das Funktionselement durch zwei miteinander drehbar verbundene Drehscheiben 9, 10 gebildet, die jeweils eine Langlochöffnung 11, 12 aufweisen. Im Detail ist dieses Funktionselement in den Figuren 10 bis 12 dargestellt. Durch Verdrehen der Drehscheiben 9, 10 gegeneinander kann ein Deckungsgrad der jeweiligen der Langlochöffnungen 11, 12 eingestellt werden, wobei über den Deckungsgrad eine Stoffleitung durch die erste Rohröffnung 6 einstellbar ist. Ist der Deckungsgrad gleich Null, so können keine Stoffe durch die Langlochöffnungen und somit keine Stoffe durch die erste Rohröffnung 6 hindurchtreten. Die drehbare Verbindung der Drehscheiben 9, 10 ist durch an der Drehscheibe 10 angeordnete Lagerstege 13 verwirklicht, die jeweils eine Rastnase 14 aufweisen. Die Lagerstege 13 ragen von unten durch Ausnehmungen 15 in der Drehscheibe 9 hindurch, wobei sich die Rastnasen 14 von oben auf der Drehscheibe 9 abstützen. Die Lagerstege 13 sind in den Ausnehmungen drehbar gelagert. Die Rastnasen 14 sind in Bezug auf die Ausnehmungen 15 hinterschnittig ausgebildet. Dargestellt ist diese Lagerung in der Fig. 12.

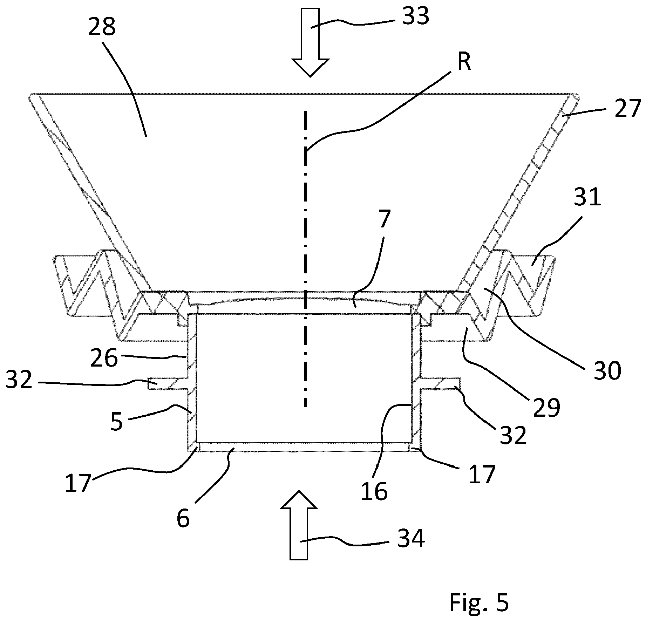

Das Funktionselement 8 wird zur Befestigung an dem Rohr 5 in selbiges eingesetzt. An einem Rohrinnenmantel 16 des Rohrs 5 ist im Bereich der ersten Rohröffnung 6 (also am unteren Rohrende in Fig. 1) ein Stützkragen 17 ausgebildet, der ausgehend von dem Rohrinnenmantel 16 radial von dem Rohrinnenmantel 16 nach rohrinnen weg ragt. Der Stützkragen 17 ist in der Darstellung nach Fig. 5 besonders gut zu erkennen. Der Stützkragen 17 begrenzt zugleich die erste Rohröffnung 6, d.h. das Rohr 5 schließt in Richtung der ersten Rohröffnung 6 mit dem Stützkragen 17 ab.

Das Funktionselement 8 weist einen Stützflansch 18 auf, mit welchem sich das Funktionselement 8 bei Befestigung desselbigen an dem Rohr 5 an dem Stützkragen 17 abstützt, sodass eine Relativbewegung des Funktionselements 8 entlang einer Rohrlängsachse R des Rohrs 5 in Richtung der ersten Rohröffnung 6 blockiert ist. Das Funktionselement 8 wird also durch Abstützen seines Stützflansches 18 an dem rohrseitigen Stützkragen 17 an dem Rohr 5 befestigt und darin gehalten. In den Figuren 6 bis 10 sind verschiedenartig ausgebildete Funktionselemente 8 dargestellt. Gemäß Fig. 9 ist das Funktionselement eine Rutsche, mit der Stoffe gerichtet aus dem Rohr 5, insbesondere aus der ersten Rohröffnung 6, leitbar sind und entlang einer Rutschfläche 19 in den Zubereitungstopf 2 rutschen können. Die Rutsche weist an ihrem oberen Ende einen halbkreisartig umlaufenden Stützflansch 18 auf.

Gemäß Fig. 7 ist das Funktionselement 8 ein Verschlusselement, nämlich eine Verschlussscheibe, mit dem die erste Rohröffnung 6 abdichtbar ist, sodass eine Stoffleitung durch die erste Rohröffnung 6 verhindert ist. Zur Befestigung an dem Rohr 5 liegt die Verschlussscheibe mit ihrem Randbereich 20 von oben auf dem Stützkragen 17 auf. Der Randbereich 20 bzw. die Verschlussscheibe als solche bildet somit den Stützflansch 18 des als Verschlussscheibe ausgebildeten Funktionselements 8 auf. Die Verschlussscheibe weist zur Bereitstellung des Stützflansches 18 einen größeren Durchmesser auf als die durch den Stützkragen 17 begrenzte erste Rohröffnung 6. Insbesondere kann die Verschlussscheibe von oben, z. B. durch die zweite Rohröffnung 7 in das Rohr 5 eingesetzt werden. Die Verschlussscheibe kann auch formflexibel ausgebildet sein, sodass diese durch Komprimieren/Biegen durch die erste Rohröffnung 6 in das Rohr 5 einsetzbar ist. An der Verschlussscheibe kann eine zusätzliche Dichtung, z. B. eine umlaufende Ringdichtung angeordnet sein.

Gemäß Fig. 6 und 8 ist das Funktionselement 8 ein Siebelement, nämlich eine mit einer Lochöffnung 21 (Fig. 6) oder mehreren Lochöffnungen 22 (Fig. 8) gelochte Siebscheibe. Zur Befestigung an dem Rohr 5 liegt die Siebscheibe mit ihrem Randbereich 20 von oben auf dem Stützkragen 17 auf. Der Randbereich 20 bzw. die Siebscheibe als solche bildet somit den Stützflansch 18 des als Siebscheibe ausgebildeten Funktionselements 8 auf. Die Siebscheibe weist zur Bereitstellung des Stützflansches 18 einen größeren Durchmesser auf als die durch den Stützkragen 17 begrenzte erste Rohröffnung 6. Insbesondere kann die Siebscheibe von oben, z. B. durch die zweite Rohröffnung 7 in das Rohr 5 eingesetzt werden. Die Siebscheibe kann auch formflexibel ausgebildet sein, sodass diese durch Komprimieren/Biegen durch die erste Rohröffnung 6 in das Rohr 5 einsetzbar ist. An der Siebscheibe kann eine zusätzliche Dichtung, z. B. eine umlaufende Ringdichtung angeordnet sein.

Bei dem Funktionselement nach Fig. 10 bis 12 ist der Stützflansch 18 durch eine Außenkante eines Kragens 23 gebildet, der umlaufend an die Drehscheibe 9 angrenzt und von dieser wegragt. Der Kragen 23 der Drehscheibe 9 überlappt partiell mit einem Kragen 24 der Drehscheibe 10. Die Kragen 23, 24 bilden zugleich eine Handhabe aus, mit der die Drehscheiben 9, 10 gegeneinander verdreht werden können. Die Kragen 23, 24 sind vorzugsweise von außen profiliert. Die Drehscheibe 9 samt ihrem Kragen 23 weist einen größeren Außendurchmesser auf als die Drehscheibe 10 mit ihrem Kragen 24.

Wie in den Figuren (vgl. z. B. Fig. 1 bis 5 sowie 13, 14) gezeigt, ist an dem Rohr 5, vorzugsweise an einem Rohraußenmantel 26, im Bereich der zweiten Rohröffnung 7 ein Trichterkörper 27 befestigt. Ein von dem Trichterkörper 27 umgebener Trichterraum 28 mündet in die zweite Rohröffnung 7.

In einer Variante kann der Trichterkörper 27 einteilig (einstückig) an dem Rohr 5 befestigt sein. In einer anderen Variante kann der Trichterkörper an dem Rohr 5 lösbar befestigt werden, z. B. mittels Formschluss. Der Trichterkörper 27 kann starr ausgebildet sein.

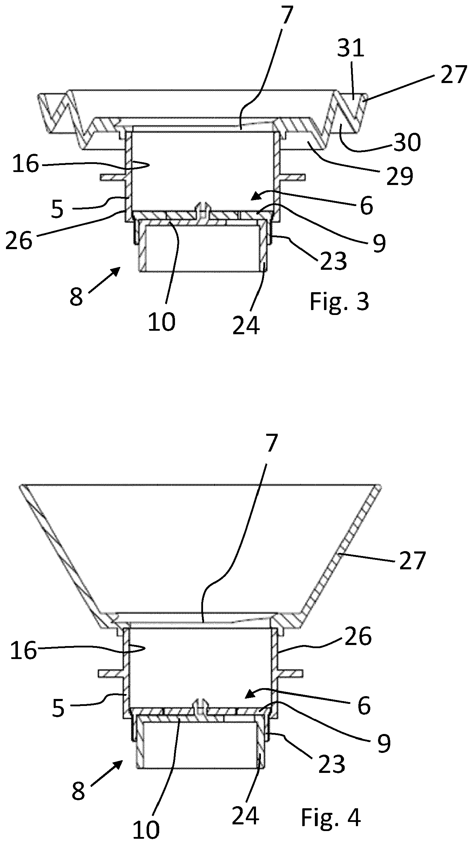

In einer Variante kann der Trichterkörper 27 ziehharmonikaartig auffaltbar sein, und von einer eingefalteten Stellung (vgl. Fig. 3), in welcher der Trichterkörper 27 keine Trichterfunktion ausbildet, in eine ausgefaltete Stellung (Fig. 4), in welcher der Trichterkörper 27 eine Trichterfunktion ausbildet, auffaltbar ist. Um ein Ein- und Ausfalten zu ermöglichen, kann der Trichterkörper 27 aus einem elastomeren Material oder einem elastischen Kunststoff gebildet sein. In Fig. 1, 2, 3 ist der Trichterkörper 27 eingefaltet dargestellt. In Fig. 4, 13 und 14 ist der Trichterkörper 27 ausgefaltet dargestellt. In der Figur 5 sind beide Stellungen des Trichterkörpers 27 illustrativ dargestellt.

Der Trichterkörper 27 kann mehrere Faltglieder 29, 30, 31 aufweisen, die jeweils eine kreisförmige oder zylindrische Form aufweisen und jeweils einen abweichenden Durchmesser aufweisen. Von innen nach außen, also ausgehend von jenem am Rohr 5 befestigten Ende des Trichterkörpers 27 nach außen nimmt der Durchmesser der Faltglieder 29, 30, 31 zu. Letztlich weist der Trichterkörper 27 im aufgefalteten Zustand von oben nach unten (also in Richtung des Rohrs 5) eine sich konisch verjüngende Form auf.

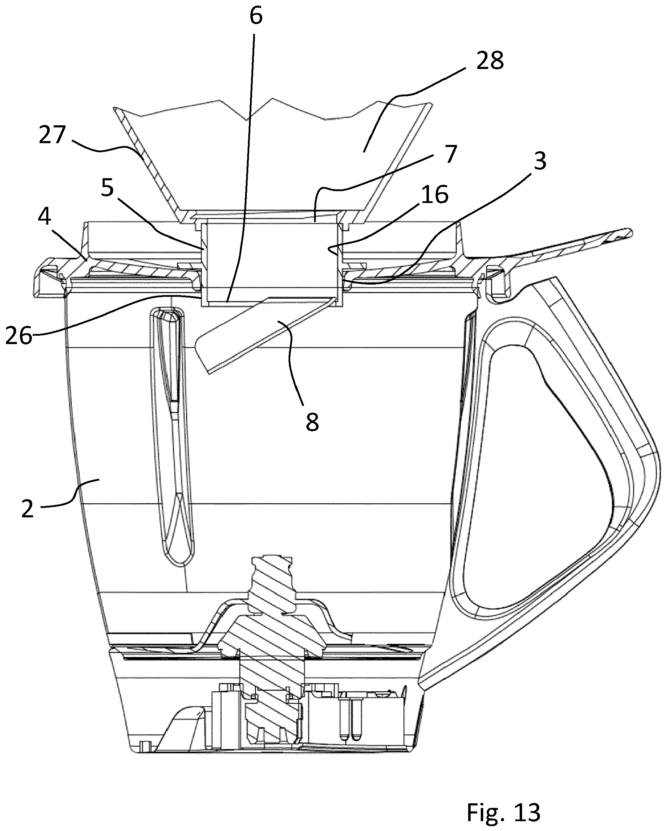

An dem Rohraußenmantel 26 ist ein umlaufender Lagerflansch 32 angeordnet ist, der eine Standfläche des Aufsatzes auf dem Deckel 4 bildet. Der Lagerflansch 32 ragt wie beispielsweise in Fig. 5 gut zu erkennen ist von dem Rohraußenmantel 26 radial nach außen weg. Wie z. B. in Fig. 1 und 13 dargestellt, liegt der Lagerflansch 32 bei in die Zuführöffnung 3 eingesetztem Rohr 5 auf dem Deckel 4 auf.

In Figur 5 ist durch die Pfeile 33, 34 dargestellt, dass Stoffe in den Trichterkörper 27 eingefüllt werden können und sodann durch den Trichterraum 28, die zweite Rohröffnung 7 und die erste Rohröffnung 6 in Richtung des Zubereitungstopfes 2 geleitet werden können und umgekehrt.

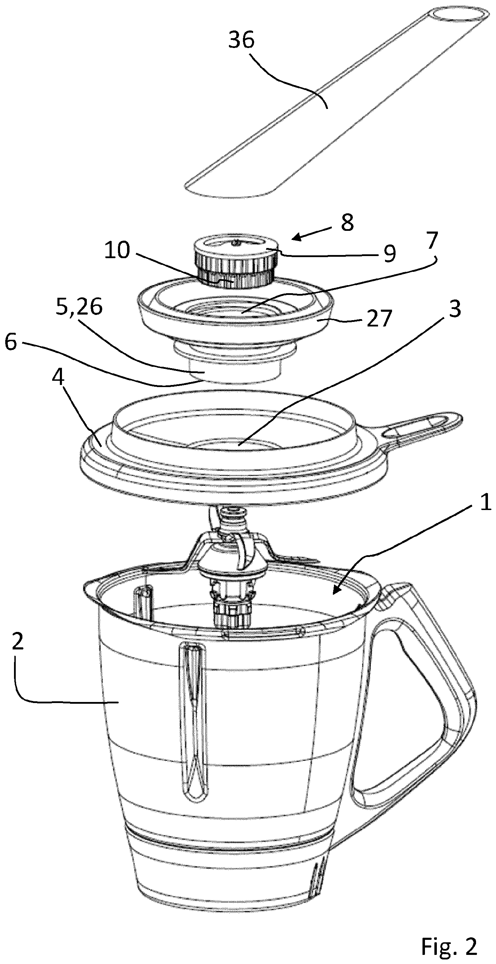

Wie in Fig. 1 und 2 gezeigt, ist an einer an dem Trichterkörper 27 ausgebildeten Lagerfalte 35, ein Dampfableitrohr 36 befestigbar, nämlich durch Eingriff einer Lagerkante 37 des Dampfableitrohrs 36 in die Lagerfalte 35. Die Lagerkante 37 ist in die Lagerfalte 35 einsteckbar und liefert eine formschlüssige, klemmende Halterung des Dampfableitrohrs 36 am Trichterkörper 27. Die Lagerkante 37 des Dampfableitrohrs 36 ist an einem unteren Ende 38 des Dampfableitrohrs 36 ausgebildet und ist durch eine Kante einer Dampfeintrittsöffnung 39 gebildet sein. Die Lagerfalte 35 ist durch eine Ausnehmung im Trichterkörper 27 gebildet.

Abschließend seien die Darstellungen in den Figuren nochmals zusammengefasst im Detail erläutert. Figur 1 zeigt eine Darstellung eines Zubereitungstopfes 2 mit abgedecktem Deckel 4. In die Zuführöffnung 3 ist das Rohr 5 des Aufsatzes eingesetzt. Als Funktionselement 8 ist bei dieser Ausführungsform das in den Figuren 10 bis 12 dargestellte Funktionselement 8 vorgesehen. Ferner ist ein Trichterkörper 27 in seiner eingefalteten Stellung wiedergegeben. Zusätzlich ist ein Dampfableitrohr an dem Trichterkörper 27 bzw. dem Aufsatz befestigt. Figur 2 zeigt die Komponenten aus Fig. 1 in einer Explosionsdarstellung.

In Figur 3 und 4 ist der Aufsatz aus Fig. 1 und 2 für sich genommen dargestellt. Der Trichterkörper 27 ist bei der Darstellung nach Fig. 3 eingefaltet, bei der Darstellung nach Fig. 4 ausgefaltet.

Figur 5 zeigt den Aufsatz ohne Funktionselement 8. In Figur 5 sind Stoffeintrittsrichtungen mit Pfeilen 33, 34 markiert. Der Trichterkörper 27 ist schematisch in seiner eingefalteten und ausgefalteten Stellung angedeutet.

In den Figuren 6 bis 12 sind Funktionselemente 8 dargestellt, wobei die Figuren 10 bis 12 das gleiche Funktionselement 8 in unterschiedlichen Ansichten zeigen.

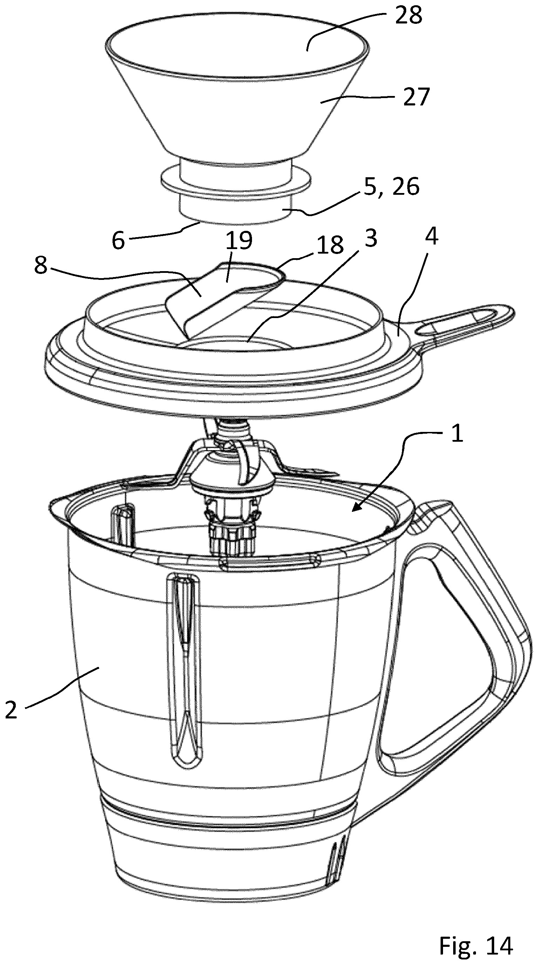

Figur 13 zeigt eine Darstellung eines Zubereitungstopfes 2 mit abgedecktem Deckel 4. In die Zuführöffnung 3 ist das Rohr 5 des Aufsatzes eingesetzt. Als Funktionselement 8 ist bei dieser Ausführungsform das in der Fig. 9 dargestellte Funktionselement 8 vorgesehen. Ferner ist ein Trichterkörper 27 in seiner ausgefalteten Stellung wiedergegeben. Figur 14 zeigt die Komponenten der Figur 13 in Explosionsansicht.

### Bezugszeichenliste

- 1: Topföffnung
- 2: Zubereitungstopf
- 3: Zuführöffnung
- 4: Deckel
- 5: Rohr
- 6: erste Rohröffnung
- 7: zweite Rohröffnung
- 8: Funktionselement
- 9: Drehscheibe
- 10: Drehscheibe
- 11: Langlochöffnung
- 12: Langlochöffnung
- 13: Lagersteg
- 14: Rastnase
- 15: Ausnehmung
- 16: Rohrinnenmantel
- 17: Stützkragen
- 18: Stützflansch
- 19: Rutschfläche
- 20: Randbereich
- 21: Lochöffnung
- 22: Lochöffnung
- 23: Kragen
- 24: Kragen
- 25: Außenkante
- 26: Rohraußenmantel
- 27: Trichterkörper
- 28: Trichterraum
- 29: Faltglied
- 30: Faltglied
- 31: Faltglied
- 32: Lagerflansch
- 33: Pfeil
- 34: Pfeil
- 35: Lagerfalte
- 36: Dampfableitrohr
- 37: Lagerkante
- 38: unteres Ende
- R: Rohrlängsachse

## Patentansprüche

1. Aufsatz für eine Küchenmaschine, wobei die Küchenmaschine einen eine Topföffnung (1) aufweisenden Zubereitungstopf (2) sowie einen eine Zuführöffnung (3) aufweisenden Deckel (4) umfasst, wobei die Topföffnung (1) mit dem Deckel (4) abdeckbar ist, wobei die Zuführöffnung (3) einen geringeren Durchmesser als die Topföffnung (1) aufweist, der Aufsatz aufweisend ein in die Zuführöffnung (3) einsetzbares Rohr (5), das eine erste Rohröffnung (6) und eine zweite Rohröffnung (7) aufweist, wobei bei in die Zuführöffnung (3) eingesetztem Rohr (5) die erste Rohröffnung (6) nach topfinnen und die zweite Rohröffnung (7) nach topfaußen weist, **gekennzeichnet durch** ein wechselbares Funktionselement (8), das an dem Rohr (5) befestigbar und mit dem eine Stoffleitung durch die erste Rohröffnung (6) beeinflussbar ist.

2. Aufsatz nach Anspruch 1, **dadurch gekennzeichnet, dass** das Funktionselement (8) an dem Rohr (5) befestigbar ist, nämlich durch Einsetzen in das Rohr (5), insbesondere in einem Klemmsitz.

3. Aufsatz nach Anspruch 1 oder 2, **dadurch gekennzeichnet, dass** an einem Rohrinnenmantel (16) des Rohrs (5), insbesondere im Bereich der ersten Rohröffnung (6), ein Stützkragen (17) ausgebildet ist, der ausgehend von dem Rohrinnenmantel (16) radial von dem Rohrinnenmantel (17) nach rohrinnen weg ragt, wobei das Funktionselement (8) einen Stützflansch (18) aufweist, mit welchem sich das Funktionselement (8) bei Befestigung desselbigen an dem Rohr (5) an dem Stützkragen (17) abstützt, sodass eine Relativbewegung des Funktionselements (8) entlang einer Rohrlängsachse (R) des Rohrs (5) in Richtung der ersten Rohröffnung (6) blockiert ist.

4. Aufsatz nach einem der vorangehenden Ansprüche, **dadurch gekennzeichnet, dass** das Funktionselement (8) eine Rutsche ist, mit der Stoffe gerichtet aus dem Rohr (5), insbesondere aus der ersten Rohröffnung (6), leitbar sind.

5. Aufsatz nach einem der Ansprüche 1 bis 3, **dadurch gekennzeichnet, dass** das Funktionselement (8) ein Verschlusselement, insbesondere eine Verschlussscheibe ist, mit dem die erste Rohröffnung (6) abdichtbar ist, sodass eine Stoffleitung durch die erste Rohröffnung (6) verhindert ist.

6. Aufsatz nach einem der Ansprüche 1 bis 3, **dadurch gekennzeichnet, dass** das Funktionselement (8) ein Siebelement, insbesondere eine mit einer (21) oder mehreren Lochöffnungen (22) gelochte Siebscheibe ist.

7. Aufsatz nach einem der Ansprüche 1 bis 3, **dadurch gekennzeichnet, dass** das Funktionselement (8) zwei miteinander drehbar verbundene Drehscheiben (9, 10) aufweist, die jeweils eine Lochöffnung, insbesondere jeweils eine Langlochöffnung (11, 12), aufweisen, und dass durch Verdrehen der Drehscheiben (9, 10) gegeneinander ein Deckungsgrad der jeweiligen Lochöffnungen, insbesondere der Langlochöffnungen (11, 12) einstellbar ist, wobei über den Deckungsgrad eine Stoffleitung durch die erste Rohröffnung (6) einstellbar ist.

8. Aufsatz nach Anspruch 7, **dadurch gekennzeichnet, dass** die Drehscheiben (9, 10) eine Verschlussstellung einnehmen können, in welcher der Deckungsgrad der jeweiligen Lochöffnungen gleich Null ist, und in welcher eine Stoffleitung durch die erste Rohröffnung (6) verhindert ist.

9. Aufsatz nach einem der vorangehenden Ansprüche, **dadurch gekennzeichnet, dass** an dem Rohr (5), vorzugsweise an einem Rohraußenmantel (26) im Bereich der zweiten Rohröffnung (7) ein Trichterkörper (27) befestigt ist.

10. Aufsatz nach Anspruch 9, **dadurch gekennzeichnet, dass** ein von dem Trichterkörper (27) umgebener Trichterraum (28) in die zweite Rohröffnung (7) mündet.

11. Aufsatz nach Anspruch 9 oder 10, **dadurch gekennzeichnet, dass** der Trichterkörper (27) ziehharmonikaartig auffaltbar ist, und von einer eingefalteten Stellung, in welcher der Trichterkörper (27) keine Trichterfunktion ausbildet, in eine ausgefaltete Stellung, in welcher der Trichterkörper (27) eine Trichterfunktion ausbildet, auffaltbar ist.

12. Aufsatz nach Anspruch 11, **dadurch gekennzeichnet, dass** der Trichterkörper (27) in seiner eingefalteten Stellung eine, vorzugsweise ringförmig durchgängige, Standfläche des Aufsatzes auf dem Deckel (4) ausbildet.

13. Aufsatz nach einem der Ansprüche 1 bis 11, **dadurch gekennzeichnet, dass** an dem Rohraußenmantel (26) ein umlaufender Lagerflansch (32) angeordnet ist, der eine Standfläche des Aufsatzes auf dem Deckel (4) bildet.

14. Aufsatz nach einem der Ansprüche 1 bis 1, **dadurch gekennzeichnet, dass** an dem Rohraußenmantel (26) mehrere Lagerflansche beabstandet zueinander angeordnet sind, die gemeinsam eine Standfläche des Aufsatzes auf dem Deckel (4) bilden.

15. Aufsatz nach einem der vorangehenden Ansprüche, **dadurch gekennzeichnet, dass** an dem Rohr (5) oder an dem Trichterkörper (27), insbesondere in einer an dem Rohr (5) oder dem Trichterkörper (27) ausgebildeten Lagerfalte (35), ein Dampfableitrohr (36) befestigbar, insbesondere durch Eingriff einer Lagerkante (37) des Dampfableitrohrs (36) in die Lagerfalte (35), lösbar befestigbar ist.

16. Küchenmaschine, die einen eine Topföffnung (1) aufweisenden Zubereitungstopf (2) sowie einen eine Zuführöffnung (3) aufweisenden Deckel (4) umfasst, wobei die Topföffnung (1) mit dem Deckel (4) abdeckbar ist, wobei die Zuführöffnung (3) einen geringeren Durchmesser als die Topföffnung (1) aufweist, wobei die Küchenmaschine weiterhin einen Aufsatz umfasst, aufweisend ein in die Zuführöffnung (3) einsetzbares Rohr (5), das eine erste Rohröffnung (6) und eine zweite Rohröffnung (7) aufweist, wobei bei in die Zuführöffnung (3) eingesetztem Rohr (5) die erste Rohröffnung (6) nach topfinnen und die zweite Rohröffnung (7) nach topfaußen weist, **gekennzeichnet durch** ein wechselbares Funktionselement (8), das an dem Rohr (5) befestigbar und mit dem eine Stoffleitung durch die erste Rohröffnung (6) beeinflussbar ist.

17. Küchenmaschine nach Anspruch 16, **dadurch gekennzeichnet, dass** der Aufsatz nach einem der Ansprüche 2 bis 15 ausgebildet ist.
